# EUROPEAN PATENT APPLICATION

(11) **EP 2 743 814 A2**
(43) Date of publication of application: **18.06.2014**
(21) Application number: 13197163.2
(22) Date of filing: 13.12.2013
(51) Int. Cl.: G06F 3/0482, G06F 9/44

(54) **Display apparatus and method of providing user interface thereof**

(30) Priority: 17.12.2012 KR 20120147628
(71) Applicant: Samsung Electronics Co., Ltd, Gyeonggi-do 443-742 (KR)
(72) Inventor: Hwang, Woo-seok, Seoul (KR); Kwon, Yong-hwan, Gyeonggi-do (KR); Bae, Hee-jeong, Gyeonggi-do (KR); Seo, Jang-won, Seoul (KR); Choi, Myung-kwan, Gyeonggi-do (KR); Choi, Yoo-jin, Seoul (KR)
(74) Representative: Walaski, Jan Filip

(57) **Abstract**

A display apparatus and a method of providing a user interface (UI) thereof are provided. The method includes displaying at least one item in a first area of a display screen, when one of the at least one item is selected, displaying a first sub screen corresponding to the selected item in a second area of the display screen and displaying at least one first lower item of the selected item, and when one of the at least one first lower item is selected, displaying a sub screen corresponding to the selected first lower item to overlap with at least a part of the first sub screen.

## Description

The present invention relates to providing a display apparatus and a method of providing a user interface (UI) thereof, and more particularly, to providing a display apparatus which provides a UI including items having a hierarchical structure therebetween and a method of providing the UI thereof.

Due to development of a display apparatus and a communication technology, the display apparatus (e.g., a smart television (TV)) provides various types of functions (e.g., a 3-dimensional (3D) effect providing function, a web browsing function, etc.) and various types of services.

As the number of functions and services of the display apparatus increases, the number of items provided on a menu of the display apparatus also increases. Therefore, a method for entering a specific menu of the display apparatus becomes diversified, and a hierarchical structure of the menu of the display apparatus becomes complex. In particular, as the hierarchical structure of the menu of the display apparatus has an increased number of hierarchical levels, it is difficult for a user to identify a hierarchical level of an item currently displayed in the hierarchical structure of the menu, when searching for the item. In other words, in a related art display apparatus, a movement between hierarchical levels of items according to an input from an input device such as, for example, a pointer is not reflected.

Accordingly, there exists a need for a method of allowing the user to easily verify a hierarchical level of a currently displayed item in the hierarchical structure of the menu.

Exemplary embodiments address at least the above problems and/or disadvantages and other disadvantages not described above.

The exemplary embodiments provide a display apparatus which hierarchically displays a sub screen corresponding to a selected item in an area of a display screen to easily indicate a hierarchical level of a currently displayed item in a hierarchical structure of a menu, and a method of providing a user interface (UI) thereof.

According to an aspect of an exemplary embodiment, there is provided a method of providing a user interface (UI). The method may include displaying at least one items in a first area of a display screen, when one of the at least one items is selected, displaying a first sub screen corresponding to the selected item in a second area of the display screen and displaying at least one first lower item of the selected item, and when one of the at least one first lower item is selected, displaying a sub screen corresponding to the selected first lower item to overlap with at least a part of the first sub screen.

The method may further include displaying at least one second lower item of the selected first lower item on the display screen, and when one of the at least one second lower item is selected, displaying a third sub screen corresponding to the selected second lower item to overlap with at least a part of the second sub screen.

The first, the second, and the third sub screens may be hierarchically displayed.

At least one of colors, brightnesses, and chromas of the first, the second, and the third sub screens may be different from one another.

The first, the second, and the third sub screens may respectively display information about items respectively corresponding to the first, the second, and the third sub screens.

The method may further include, when the second sub screen is selected according to a user control when the first, the second, and the third sub screens are hierarchically displayed, removing the third sub screen from the display screen, displaying the first and the second sub screens to overlap with at least a part of each other, and displaying the at least one second lower item.

The method may further include, when a user control for selecting an immediate upper hierarchical item is input when the first, the second, and the third sub screens are hierarchically displayed, removing the third sub screen from the display screen, displaying the first and the second sub screens to overlap with at least a part of each other, and displaying the at least one second lower item.

The at least one first lower item may be displayed in at least one of the first area of the display screen and a third area of the display screen.

When the one of the at least one item is selected, the selected item displayed in the first area may be removed, and the first sub screen may be generated with an animation effect of the selected item gradually changing to the first sub screen.

According to an aspect of another exemplary embodiment, there is provided a display apparatus including a display configured to display at least one item in a first area of a display screen, a user input part configured to receive a user command, and a controller configured to control the display to, when one of the at least one item is selected through the user input part, display a first sub screen corresponding to the selected item in a second area of the display screen, display at least one first lower item of the selected item, and, when one of the at least one first lower item is selected through the user input part, display a second sub screen corresponding to the selected first lower item to overlap with at least a part of the first sub screen.

The controller may control the display to display at least one second lower item of the selected first lower item on the display screen, and, when one of the at least one second lower item is selected through the user input part, display a third sub screen corresponding to the selected second lower item to overlap with at least a part of the second sub screen.

The first, the second, and the third sub screens may be hierarchically displayed. At least one of colors, brightnesses, and chromas of the first, the second, and the third sub screens may be different from one another.

The first, the second, and the third sub screens may respectively display information about items respectively corresponding to the first, the second, and the third sub screens.

The controller may control the display to, when a user control input for selecting the second sub screen among the first, the second, and the third sub screens that are hierarchically displayed is input through the user input part, remove the third sub screen from the display screen, display the first and the second sub screens to overlap with at least a part of each other, and display the at least one second lower item on the display screen.

The user input part may be a remote controller. The controller may control the display to, when a previous button for selecting an immediate upper hierarchical item of the remote controller is input when the first, the second, and the third sub screens are hierarchically displayed, remove the third sub screen from the display screen, display the first and the second sub screens to overlap with at least a part of each other, and display the at least one second lower item on the display screen.

The at least one first lower items may be displayed in at least one of the first area of the display screen and a third area of the display screen.

When the one of the at least one item is selected, the controller may control the display to remove the selected item displayed in the first area and display the first sub screen in the second area with an animation effect of the selected item gradually changing to the first sub screen.

According to an aspect of another exemplary embodiment, there is provided a non-transitory computer-readable recording medium having embodied thereon at least one program comprising a command for performing a method of providing a user interface (UI) in a display apparatus, the method including: displaying at least one menu item in a hierarchical menu; when one of the at least one menu item is selected, displaying a first sub screen corresponding to the selected menu item and displaying at least one sub menu item of the selected menu item; and when one of the at least one sub menu item of the selected menu item is selected, displaying a second sub screen corresponding to the selected sub menu item, the first and the second sub screens respectively indicating a hierarchical level relationship therebetween.

The first and the second sub screens may be overlapped with each other according to respective hierarchical levels thereof.

The above and/or other aspects will be more apparent by describing certain exemplary embodiments with reference to the accompanying drawings, in which:
FIG. 1 is a schematic block diagram illustrating a structure of a display apparatus according to an exemplary embodiment;
FIG. 2 is a detailed block illustrating a structure of a display apparatus according to an exemplary embodiment;
FIGS. 3 through 9 are views illustrating a method of providing a user interface (UI) according to various exemplary embodiments; and
FIG. 10 is a flowchart illustrating a method of providing a UI of a display apparatus according to an exemplary embodiment.

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

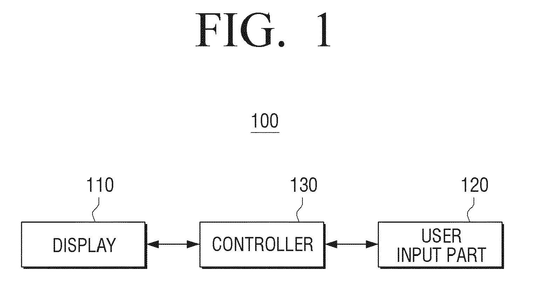

FIG. 1 is a schematic block diagram illustrating a structure of a display apparatus 100 according to an exemplary embodiment. Referring to FIG. 1, the display apparatus 100 includes a display 110, a user input part 120, and a controller 130. Here, the display apparatus 100 may be embodied in a smart television (TV), but this is only an exemplary embodiment. Therefore, the display apparatus 100 may be embodied in various types of display apparatuses including, for example, a desktop personal computer (PC), a notebook PC, a projector, a tablet PC, a cellular phone, etc.

The display 110 outputs image data under a control of the controller 130. In particular, the display 110 displays at least one item (e.g., a lower area) in a display screen. According to a user control, the display 110 also displays a sub screen corresponding to a selected item in another area (e.g., a left upper area) of the display screen and displays at least one first item of the selected item.

The user input part 120 receives a user command for controlling the display apparatus 100. In particular, the user input part 120 receives a user command for selecting items displayed on the display 110.

Here, the user input part 120 may include a touch screen, a pointing device, a motion input part which senses a motion of a user, a mouse, a remote controller, or the like, but this is only an exemplary embodiment. Therefore, the user input part 120 may be embodied in another type of input device. In a case where the user input part 120 is the pointing device, the display 110 may displays a pointer on the display screen.

The controller 130 controls an overall operation of the display apparatus 100 according to the user command input through the user input part 120.

In particular, if at least one item is displayed in a first area (e.g., a lower area) of the display 110, and one of at least one items is selected through the user input part 120, the controller 130 controls the display 110 to display a first sub screen corresponding to the selected item in a second area (e.g., a left upper area) of the display screen and display at least one first lower item of the selected item. When the first sub screen is displayed, the controller 130 may provide an animation effect in generating the first sub screen. Also, at least one first lower item may be displayed in at least one of the first area of the display screen and a third area (e.g., a central area) of the display screen.

If one of at least one first lower item is selected through the user input part 120, the controller 130 controls the display 110 to display a second sub screen corresponding to the selected first lower item in overlap with at least a part of the first sub screen.

When the second sub screen overlaps with the first sub screen, the controller 130 controls the display 110 to display at least one second lower item as a lower item of the selected first lower item. If one of the at least one second lower item is selected through the user input part 120, the controller 130 controls the display 110 to display a third screen corresponding to the selected second lower item in overlap with at least a part of the second sub screen.

Here, parts of the first, second, and third sub screens may overlap with one another and may be hierarchically displayed.

At least one of colors, brightnesses, and chromas of the first, second, and third sub screens may be different from one another. For example, brightness of the first sub screen may be the darkest, and brightness of the third sub screen may be the brightest. Therefore, a user may identify that the first, second, and third screens are in a hierarchical structure.

The first, second, and third sub screens may include information about items respectively corresponding to the first, second, and third sub screens. For example, the first, second, and third sub screens may include information about titles, sources, etc. of the items respectively corresponding to the first, second, and third sub screens.

The number of sub screens displayed on the display 110 may be limited to a preset number (e.g., three). For example, if one of at least one third lower item is selected when the at least one third item is displayed as a lower item of the second lower item, the controller 130 controls the display 110 to remove the first sub screen from the display screen, move the second sub screen into a previous position of the first sub screen, moves the third sub screen into a previous position of the second sub screen, and display a fourth sub screen corresponding to the selected third lower item. In other words, the controller 130 may maintain the number of displayed sub screens to a preset number, e.g., three, by removing an excessive sub screen.

The controller 130 provides a movement operation between hierarchies of items by using a sub screen. In detail, if an input device such as, for example, a pointer is controlled according to the user control input through the user input part 120 to select the second sub screen when the first, second, and third sub screens are hierarchically displayed, the controller 130 controls the display 110 to remove the third sub screen from the display screen, overlap the first and second sub screens with each other, and display at least one second lower item corresponding to the second sub screen on the display screen.

If the input device is a remote controller and the user selects a previous button of the remote controller, the controller 130 controls the display 110 to provide a sub screen and items according to a previously displayed hierarchy. In detail, if a user control to select the previous button of the remote controller is input when the first, second, and third sub screens are hierarchically displayed, the controller 130 controls the display 110 to remove the third screen from the display screen, displays the first and second sub screens in overlap with at least a part of each other, and display at least one second lower item corresponding to the second sub screen on the display screen.

As described above, a hierarchical structure of a currently displayed item is displayed by using a sub screen. Therefore, the user may easily identify the hierarchical structure of the currently displayed item.

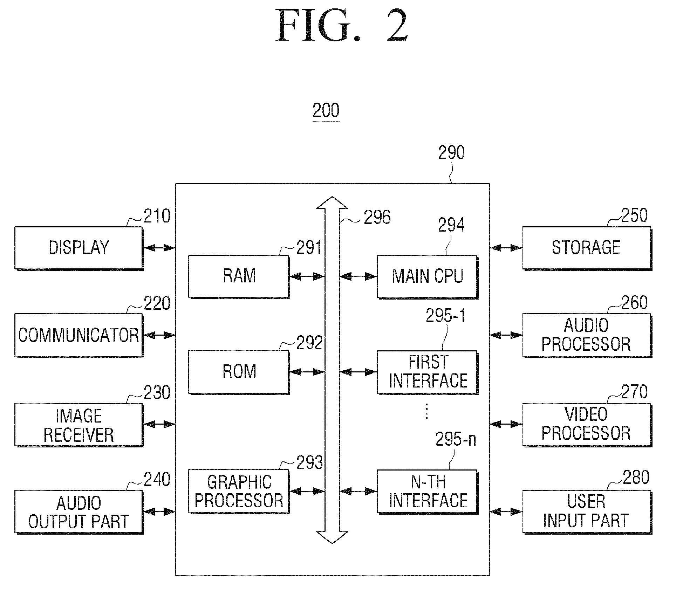

A display apparatus will now be described in more detail with reference to FIGS. 2 through 6. FIG. 2 is a detailed block diagram illustrating a structure of a display apparatus 200 according to an exemplary embodiment. Referring to FIG. 2, the display apparatus 200 includes a display 210, a communicator 220, an image receiver 230, an audio output part 240, a storage 250, an audio processor 260, a video processor 270, a user input part 280, and a controller 290,

FIG. 2 illustrates various elements of the display apparatus 200 which has various functions such as a communicating function, a broadcast receiving function, a moving picture playing function, a displaying function, etc. In an alternative embodiment, some of the elements of FIG. 2 may be omitted or modified or other elements may be further added, depending on functions provided by the display apparatus 200.

The display 210 displays at least one of a video frame and various types of screens generated by a graphic processor 293. Here, the video processor 270 processes image data received from the image receiver 230 to generate the video frame. In particular, the display 210 displays at least one item in an area (e.g., a lower area) of a display screen. The display 210 displays a sub screen corresponding to an item selected in response to a user control.

The communicator 220 communicates with various types of external apparatuses according to various types of communication methods. The communicator 220 may include a communication chip such as a WiFi chip, a Bluetooth chip, a near field communication (NFC) chip, a wireless communication chip, etc. Here, the WiFi chip, the Bluetooth chip, and the NFC chip are used to respectively perform communications according to a WiFi communication method, a Bluetooth communication method, and an NFC communication method. The NFC chip refers to a chip which operates according to the NFC communication method using a band of 12.56 MHz among various ranges of radio frequency identification (RFID) frequency bands such as 135kHz, 13.56MHz, 433MHz, 860∼960MHz, 2.45GHz, etc. If the WiFi chip or the Bluetooth chip is used, connection information such as a Service Set Identification (SSID), a session key, etc. may be first transmitted and received and a communication connection may be performed by using the connection information to transmit and receive various information. The wireless communication chip refers to a chip which is used to perform a communication according to a communication standard such as Institute of Electrical and Electronics Engineers (IEEE), Zigbee, 3rd Generation (3G), 3rd Generation Partnership Project (3GPP), Long term Evolution (LTE), etc.

The image receiver 230 receives the image data from various sources. For example, the image receive 230 may receive broadcast data from an external broadcasting station and receive image data from an external apparatus (e.g. a digital versatile disk (DVD) device).

The audio output part 240 outputs audio data including notification voices or voicemails processed by the audio processor 260.

The storage 250 stores various types of modules for driving the display apparatus 200. For example, the storage 250 may store software including software which implements a base module (not shown), a sensing module (not shown), a communication module (not shown), a presentation module (not shown), a web browser module (not shown), and a service module (not shown). Here, the base module processes a signal transmitted from each software of the display apparatus 200 and transmits the processed signal to an upper layer module. The sensing module collects information from various types of sensors, parses and manages the collected information, and may include a face recognizing module (not shown), a voice recognizing module (not shown), a motion recognizing module (not shown), an NFC recognizing module (not shown), etc. The presentation module provides a display screen and may include a multimedia module (not shown) for playing and outputting a multimedia content and a UI rendering module (not shown) for processing a UI and a graphic. The communication module performs a communication with an external apparatus. The web browser module performs web browsing to access a web server. The service module includes various types of applications for providing various types of services.

As described above, the storage 250 may include various types of program modules (not shown). However, it should be noted that some of the various types of program modules may be omitted or changed or other program modules may be added according to a type and a characteristic of the display apparatus 200. For example, when the display apparatus 200 is a tablet PC, the base module may further include a position determining module for determining a global positioning system (GPS) based position, and the sensing module may further include a sensing module for sensing a motion of a user.

The audio processor 260 processes audio data. The audio processor 260 may perform various types of processing, such as decoding, amplifying, noise-filtering, etc., with respect to the audio data. The audio data processed by the audio processor 260 are output to the audio output part 240.

The video processor 270 processes the image data received by the image receiver 230. The video processor 270 performs various types of image-processing, such as decoding, scaling, noise-filtering, frame rate converting, resolution converting, etc., with respect to the image data.

The user input part 280 receives a user command for controlling an overall operation of the display apparatus 200. In particular, the user input part 280 receives a user command for selecting an item displayed on the display screen.

Here, the user input part 280 may be a remote controller capable of controlling the display apparatus 200, but this is only an exemplary embodiment. Alternative examples of the user input part 280 may include a touch screen, a pointing device, a motion input part, a voice input part, or the like.

The controller 290 controls an overall operation of the display apparatus 200 by using at least one program stored in the storage 250.

As shown in FIG. 2, the controller 290 includes a random access memory (RAM) 291, a read only memory (ROM) 292, a graphic processor 293, a main central processing unit (CPU) 294, first through n-th interfaces 295-1 through 295-n, and a bus 296. Here, the RAM 291, the ROM 292, the graphic processor 293, the main CPU 294, and the first through n-th interfaces 295-1 through 295-n are connected to one another through the bus 296.

The ROM 292 stores a set of commands for system booting, etc. If a turn-on command is input to supply power, the main CPU 294 copies an operating system (O/S) stored in the storage 250 into the RAM 291 according to a command stored in the ROM 292 and executes the O/S to boot a system. If the system is completely booted, the main CPU 294 copies various types of application programs stored in the storage 250 into the RAM 291 and executes the application programs copied into the RAM 291 to perform various types of operations.

The graphic processor 293 generates a screen including various types of objects such as an icon, an image, a text, etc. by using a calculator (not shown) and a renderer (not shown). The calculator calculates an attribute value, such as coordinate values through which the objects are to be represented, shapes, sizes, and colors, etc., of the objects, according to a layout of the screen by using a control command received from the user input part 280. The renderer generates various types of layout screens including objects based on the attribute value calculated by the calculator. The various types of layout screens generated by the renderer are displayed on a display are of the display 210.

The main CPU 294 accesses the storage 250 to perform booting by using the O/S stored in the storage 250. The main CPU 294 performs various types of operations by using various types of programs, contents, data, etc. stored in the storage 250.

The first through n-th interfaces 295-1 through 295-n are connected to the above-described various types of elements. One of the first through n-th interfaces 295-1 through 295-n may be a network interface which is connected to an external apparatus through a network.

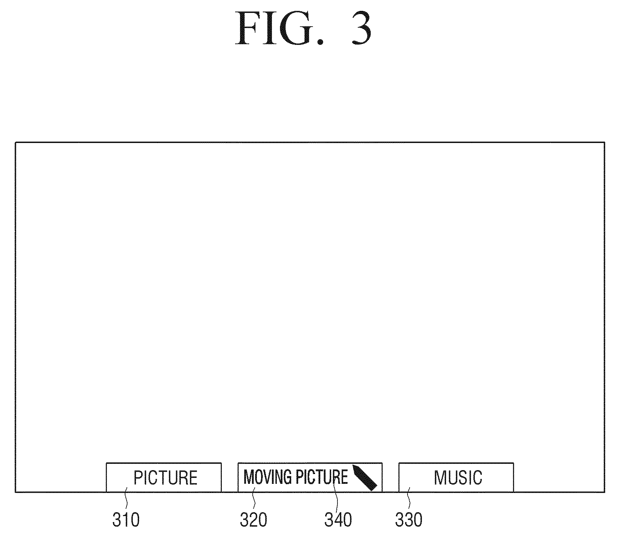

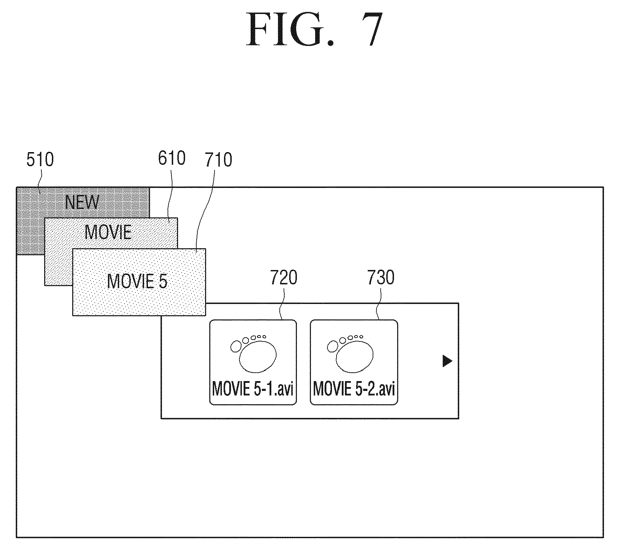

In particular, the controller 290 displays a hierarchical structure of an item to the user by using a sub screen. This will be described in detail later with reference to FIGS. 3 through 9.

The controller 290 controls the display 210 to display at least one item in an area of the display screen. For example, as shown in FIG. 3, the controller 290 controls the display 210 to display a plurality of items 310, 320, and 330 in a lower area of the display screen. Here, the plurality of items 310, 320, and 330 include a "picture" item 310, a "moving picture" item 320, and a "music" item 330. According to an exemplary embodiment, the controller 290 may not display an image on a display background screen as shown in FIG. 3. However, this is only an exemplary embodiment, and thus, in an alternative embodiment, the controller 290 may display an image (e.g., a broadcast image, a content image, or the like) received through the image receiver 230 on the display background screen.

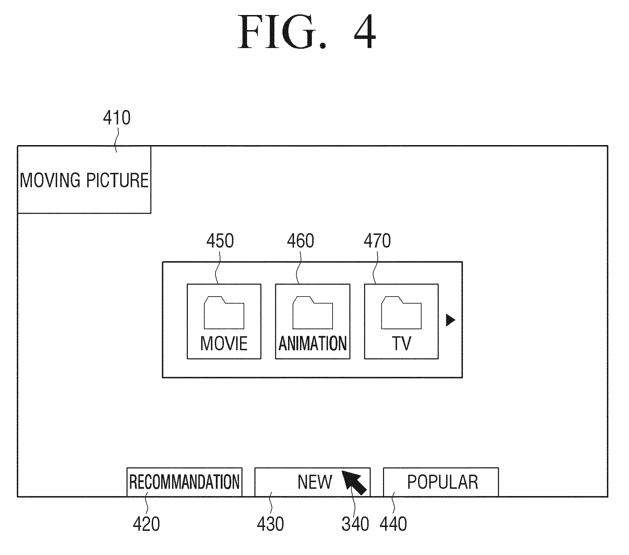

If one of at least one items is selected, the controller 290 controls the display 210 to display a first sub screen corresponding to the selected item in another area of the display screen and display at least one first lower item of the selected item. For example, if the "moving picture" item 320 of the plurality of items 310, 320, and 330 is selected, the controller 290 displays, on the display 210, a first sub screen 410 corresponding to the "moving picture" item 320 in a left upper area of the display screen as shown in FIG. 4. Here, the first sub screen 410 may be represented as "moving picture" to indicate the "moving picture" item 320.

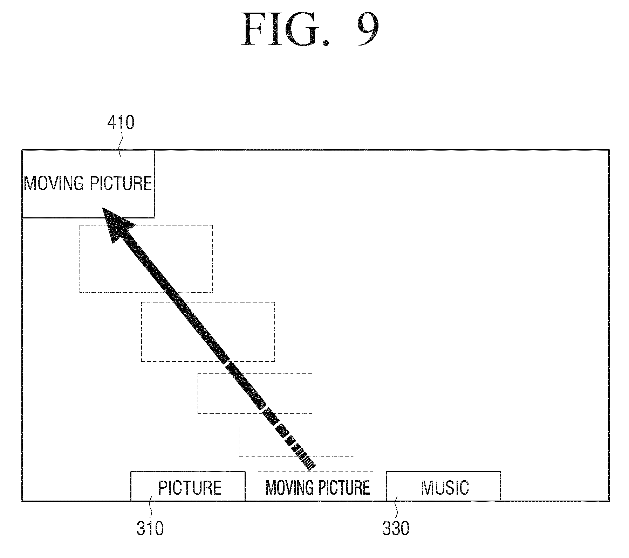

When the first sub screen 410 is displayed in the left upper area, the controller 290 may provide an animation effect of moving the "moving picture" item 320 into the left upper area to form the first sub screen 410. In detail, if the "moving picture" item 320 is selected, the controller 290 may generate an animation effect such that, for example, the "moving picture" item 320 moves to the left upper area of the display screen, while being enlarged gradually to form the first sub screen 410, as shown in FIG. 9. The animation effect may be equally applied to other items when selected to generate a sub menu.

The controller 290 controls the display 210 to display a "recommendation" item 420, a "new' item 430, and "popular" item 430 as lower items of the "moving picture" item 320 in a lower area of the display screen and display a "movie" item 450, an "animation" item 460, and a "TV" item 470 as lower items of the "moving picture" item 320 in a central area of the display screen. In other words, lower items of the "moving picture" item 320 may be displayed in the central area of the display screen as well as the lower area of the display screen.

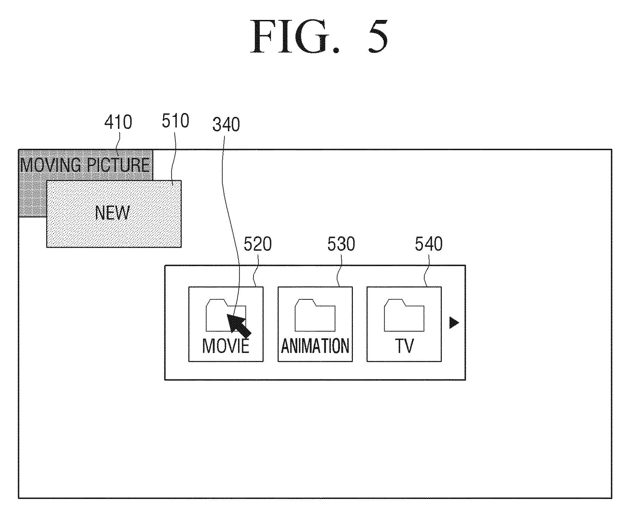

If one of at least one first lower item is selected, the controller 290 controls the display 210 to overlap a second sub screen corresponding to the selected first lower item with at least a part of the first sub screen 410. For example, if the "new" item 430 of the first lower items 420 through 470 shown in FIG. 4 is selected through a control of a pointer 340, the controller 290 controls to overlap a second sub screen 510 corresponding to the "new" item 430 with a part of the first sub screen 410 to be displayed on the display 210 as shown in FIG. 5. Here, the second sub screen 510 may be represented as "new" to indicate the "new" item 430.

The controller 290 controls the display 210 to display at least one second lower items as lower items of the selected first lower item. For example, as shown in FIG. 5, the controller 290 controls the display 210 to display the "movie" item 520, the "animation" item 530, and the "TV" item 540 as lower items of the "new" item 430 in the central area of the display screen.

If one of the at least one second lower items is selected, the controller 290 controls to overlap a third sub screen corresponding to the selected second lower item with at least a part of the second sub screen 510. For example, the "movie" item 520 of the lower items 520, 530, and 540 shown in FIG. 5 is selected, the controller 290 controls to overlap a third sub screen 610 corresponding to the "movie" item 520 with at least a part of the second sub screen 510. Here, the third sub screen 610 may be represented as "movie" to indicate the "movie" item 520.

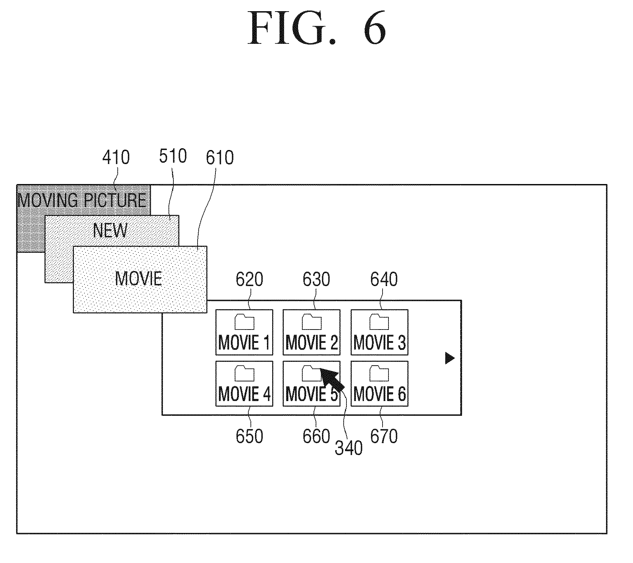

Here, as shown in FIG. 6, parts of the first, second, and third sub screens 410, 510, and 610 overlap with one another to be hierarchically displayed.

At least ones of colors, brightnesses, and chromas of the first, second, and third sub screens 410, 510, and 610 may be different from one another. For example, as shown in FIG. 6, a brightness of the first sub screen 410 corresponding to the "moving picture" item 320 that is a highest hierarchy may be the darkest, and a brightness of the third sub screen 610 corresponding to the "movie" item 520 that is a lowest hierarchy may be the brightest.

Here, the controller 290 controls the display 210 to display at least one third lower item as lower items of the selected second lower item. For example, as shown in FIG. 6, the controller 290 controls the display 210 to display a "movie 1" item 620, a "movie 2" item 630, a "movie 3" item 640, a "movie 4" item 650, a "movie 5" item 660, and a "movie 6" item 670 as lower items of the "movie" item 520.

The controller 290 controls the display 210 to display sub screens of which number is smaller than or equal to a preset number. For example, if the preset number is set to three and the "movie 5" item 660 is selected among the lower items 620 through 670 shown in FIG. 6, the controller 290 controls the display 210 to remove the first sub screen 410 from the display screen, move the second and third sub screens 510 and 610 into previous positions of the previous first sub screen 410 and the second sub screen 510, respectively, and display a fourth sub screen 710 corresponding to the "movie 5" item 660 in overlap with a part of the third sub screen 610. Therefore, the controller 290 controls the display 210 to display three or less sub screens on the display screen.

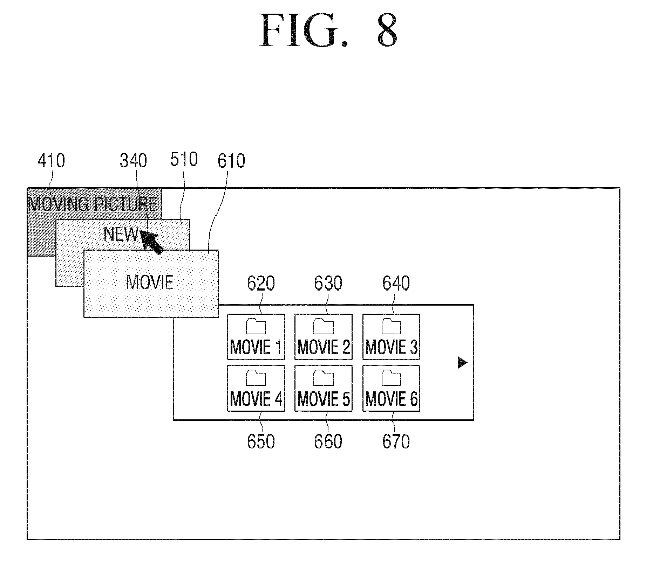

The controller 290 may move between hierarchies of items by using a sub screen. For example, as shown in FIG. 8, when the pointer 340 is moved according to a user control input through the user input part 280 to select the second sub screen 510 among the first, second, and third sub screens 410 510, and 610 that are displayed, the controller 290 changes the display screen to a display screen corresponding to the second sub screen 510, as shown in FIG. 5. Also, as shown in FIG. 8, when the pointer 340 is moved according to a user control input through the user input part 280 to select the first sub screen 410 among the first, second, and third sub screens 410, 510, and 610 that are displayed, the controller 290 changes the display screen to a display screen corresponding to the first sub screen 410, as shown in FIG. 4. In other words, the controller 290 may control to display a sub screen having a previous hierarchy, i.e., a lower hierarchy previously displayed.

In an exemplary embodiment, if the user input part 280 is a remote controller, and a previous button of the remote controller is selected, the controller 290 may change the display screen to a display screen having the previous hierarchy. For example, if a user command to select the previous button of the remote controller is input when a display screen as shown in FIG. 8 is displayed on the display 210, the controller 290 controls the display 210 to display a display screen as shown in FIG. 5.

According to the above-described various exemplary embodiments, the user may easily identify a hierarchical structure of a currently displayed item. Also, the user may further easily perform a movement between hierarchies of items.

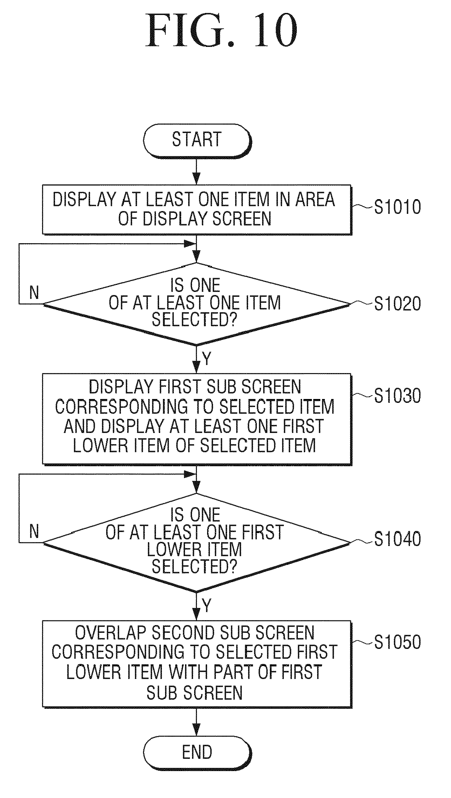

A method of providing a UI of the display apparatus 100 according to an exemplary embodiment will now be described with reference to FIG. 10.

Referring to FIG. 10, in operation S1010, the display apparatus 100 displays at least one item in an area of a display screen.

In operation S1020, the display apparatus 100 determines whether a user command to select one of the at least one item is input.

If one of the at least one items is selected in operation S S1020, the display apparatus 100 displays a first sub screen corresponding to the selected item and displays at least one first lower item of the selected item in operation S1030. Here, in an exemplary embodiment, the display apparatus 100 may display the first sub screen in an area different from the area in which the selected item is displayed.

In operation S1040, the display apparatus 100 determines whether a user command to select one of at least one first lower item is input.

If one of the at least one first lower item is selected in operation S1040, the display apparatus 100 displays a second sub screen corresponding to the selected first lower item in overlap with a part of the first sub screen in operation S1050. In other words, as shown in FIG. 5, the display apparatus 100 may hierarchically display the first and second sub screens.

According to the above-described method, a sub screen may be displayed in an area of the display screen when the user selects an item of a lower hierarchy. Therefore, the user may easily identify a hierarchical structure of items currently displayed on the display screen through the sub screen.

A method of providing a UI of a display apparatus according to the above-described various exemplary embodiments may be embodied in a program and provided to the display apparatus.

In an exemplary embodiment, there may be provided a non-transitory computer readable medium which stores a program including displaying at least one item in an area of a display screen, when one of the at least one item is selected, displaying a first sub screen corresponding to the selected item in another area of the display screen and displaying at least one first lower item of the selected item, and when one of the at least one first lower item is selected, displaying a second sub screen corresponding to the selected first lower item in overlap with at least a part of the first sub screen.

The non-transitory computer readable medium refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method of providing a user interface UI, the method comprising:
displaying at least one item in an area of a display screen;
if one of the at least one item is selected, displaying a first sub screen corresponding to the selected item in another area of the display screen and displaying at least one first lower item of the selected item; and
if one of the at least one first lower item is selected, overlapping a sub screen corresponding to the selected first lower item with a part of the first sub screen.

2. The method of claim 1, further comprising:
displaying at least one second lower item as a lower item of the selected first lower item on the display screen; and
if one of the at least one second lower item is selected, overlapping a third sub screen corresponding to the selected second lower item with a part of the second sub screen.

3. The method of claim 2, wherein the first, second, and third sub screens are hierarchically displayed.

4. The method of claim 2 or 3, wherein at least ones of colors, brightnesses, and chromas of the first, second, and third sub screens are different from one another.

5. The method of any one of claims 2 through 4, wherein the first, second, and third sub screens respectively display information about items respectively corresponding to the first, second, and third sub screens.

6. The method of any one of claims 2 through 5, further comprising:
if the second sub screen is selected according to a user control using a pointer when the first, second, and third sub screens are hierarchically displayed, removing the third sub screen from the display screen, overlapping only the first and second sub screens with each other, and displaying at least one second lower item.

7. The method of any one of claims 2 through 5, further comprising:
if a user control to select a previous button of a remote controller is input when the first, second, and third sub screens are hierarchically displayed, removing the third sub screen from the display screen, overlapping only the first and second sub screens, and displaying the at least one second lower item.

8. The method of any one of claims 1 through 7, wherein the at least one first lower item is displayed in at least one of an area of the display screen and another area of the display screen.

9. The method of any one of claims 1 through 8, wherein the selected item displayed in the area is moved into the another area, and a layout of the selected item is changed when the selected item is moved, to display the first sub screen.

10. A display apparatus comprising:
a display arranged to display at least one item in an area of a display screen;
a user input part arranged to receive a user command; and
a controller arranged to control the display to, if one of the at least one item is selected through the user input part, display a first sub screen corresponding to the selected item in another area of the display screen, display at least one first lower item of the selected item, and, if one of the at least one first lower item is selected through the user input part, overlap a second sub screen corresponding to the selected first lower item with a part of the first sub screen.

11. The display apparatus of claim 10, wherein the controller is arranged to control the display to display at least one second lower item as a lower item of the selected first lower item on the display screen, and, if one of the at least one second lower item is selected through the user input part, overlap a third sub screen corresponding to the selected second lower item with a part of the second sub screen.

12. The display apparatus of claim 11, wherein the first, second, and third sub screens are hierarchically displayed.

13. The display apparatus of claim 11 or 12, wherein at least ones of colors, brightnesses, and chromas of the first, second, and third sub screens are different from one another.

14. The display apparatus of any one of claims 11 through 13, wherein the first, second, and third sub screens respectively display information about items respectively corresponding to the first, second, and third sub screens.

15. The display apparatus of any one of claims 11 through 14, wherein the controller is arranged to control the display to, if a pointer is controlled according to a user control input into the user input part to select the second sub screen when the first, second, and third sub screens are hierarchically displayed, remove the third sub screen from the display screen, overlap only the first and second sub screens, and display the at least one lower item on the display screen.
